# EUROPEAN PATENT SPECIFICATION

(11) **EP 3 079 462 B1**
(45) Date of publication and mention of the grant of the patent: **21.05.2025**
(21) Application number: 14821495.0
(22) Date of filing: 11.12.2014
(51) Int. Cl.: A01K 5/01

(54) **LONG TROUGH**
LÄNGLICHER TROG
AUGE LONGUE

(30) Priority: 11.12.2013 DK 201370763
(43) Date of publication of application: 19.10.2016
(73) Proprietor: Polysan A/S, 5672 Broby (DK)
(72) Inventor: SØRENSEN, Villy Juhl, DK-7430 Ikast (DK)
(74) Representative: Patrade A/S
(86) International application number: PCT/DK2014/050425
(87) International publication number: WO 2015/086031

(56) References cited:
- EP-A1- 0 440 596
- DE-C1- 4 444 300
- FR-A1- 2 547 700
- FR-A1- 2 628 288

## Description

### Field of the Invention

The present invention concerns a long trough for mounting under a partitioning between two stys, including a plurality of aligned, elongated trough elements adapted to be juxtaposed along a longitudinal direction, the long trough at each opposite end comprises an end wall arranged on an outermost trough element, the long trough further comprises at least one transverse wall arranged in an interposed position inside the long trough between the end walls, wherein the at least one transverse wall is extending transversely of the trough element.

The application is typically for pigstys. The long trough may, however, also be used for other animals.

### Background of the Invention

It is prior art to cast trough elements and to join these into a long trough which typically can have a length of 5-7 metres. The long trough is disposed under a sty separation/partitioning that can be of plastic planks, metal rods, or a similar design keeping the animals in two stys apart. Animals from two stys can thereby eat from the same long trough. The partitioning supports water pipes and feed pipes used for conducting water and feed as dry feed or wet feed to the long trough. Thus it has been known to fasten the pipes to a sty partitioning which has been provided in immediate connection to the long trough, as separate sty partitioning or as a sty partitioning which is integrated with the long trough.

The long trough is divided into sections that ensure space for a number of animals per section. These sections may each consist of a trough element typically having a length of 1 m to 1.3 m, and more specifically a length of 1.2 m. In pigstys is typically calculated with 0.33 m per pig at a trough.

In recent years, an increased use of polymeric concrete for making long troughs has been experienced, as polymeric concrete has advantageous properties.

By casting trough elements in polymeric concrete it is, however, not possible to cast two end walls in a trough element due to the contraction occurring in the polymeric concrete. It is possible to cast troughs with an end wall at one end. Trough elements in polymeric concrete have hithertofore only been cast with the profile for bottom and sides and with an end wall. Bottom and sides can here constitute a curving shape which is approximately partly circular, or it may consist of several rectilinear section that define sidewalls and bottom in the trough. By this design, the end wall will have the same height as the upper edges of the sides of the trough element.

A number of these elongated trough elements are juxtaposed in order to form the long trough. In these trough elements are glued transverse walls to which the partitionings between the stys are mounted. Moreover, end walls having a shape different from the shape of the transverse walls are made and glued on the outermost trough elements in order to constitute end walls in the long trough. However, problems with durability in the gluing have appeared. Furthermore, the gluing has been a separate process by which adapted transverse walls and end walls had to be mounted and held in fixtures. This has been a work-intensive process.

Furthermore, until now brackets have been used extending across the long trough in order to mount the partitioning. The brackets are often a hazard for the pigs who can break their legs in these brackets since they extend beyond the sides of the long trough.

Moreover, it is also known with spears bored down through the elements of the long trough in order to fasten a partitioning. This is not expedient as a slotted floor is frequently provided under a long trough, and there is a need for a solid fastening. Thus there is a risk of lack of securing of the partitioning and risk of leakage in the long trough.

By long troughs made of polymeric concrete there is usually achieved a design which is cheaper than troughs of stainless steel. However, long troughs of polymeric concrete, as mentioned above, will be associated with costs of mounting. The mounting of polymeric troughs in a stable construction may be facilitated by embedding fastening elements in the base element of the trough.

However, the problems of mounting the partitioning above the trough and the difficulty of positioning transverse walls will still entail technical problems by the polymeric trough.

DE 4444300 C1 discloses a trough element made of polymeric concrete and which is made with a transverse wall at the ends of the trough element. This transverse wall covers the bottom of the trough and does not allow alignment of several trough elements in continuation of each other with the possibility of wet feeding along the entire long trough with feeding by one feed pipe.

FR 2628288 A1 discloses a separating barrier consisting of a series of longitudinal barrier elements held in place by a number of upright posts each having an elongated vertical slot for receiving the barrier elements. The posts and barrier elements are made of concrete for reducing corrosion and abrasion. The lower end of each post has a Y-shaped profile adapted to fit into a long trough arranged on the floor, where a central recess is formed between two projecting fingers of the lower end for enabling liquid food to pass under the post. The long trough comprises a plurality of trough elements of concrete aligned in the longitudinal direction.

FR 2628288 A1 teaches that the barrier elements can be held in place by a central post and opposite end posts, each having a recess at the lower end. FR 2628288 A1 also teaches that the barrier elements can be held in place by only a central post, where the ends of the barrier plates are fixed to the walls of the building by means of support devices made of concrete or metal. However, there is no mentioning of the long trough being closed off at the ends, therefore separate end walls must be installed or the ends of the long trough must contact the walls of the building.

For many years there has thus been a desire to make the production more efficient and at the same time avoid the problems and the time consumption associated with the prior art long troughs.

### Object of the Invention

It is the object of the present invention to indicate a long trough of the kind indicated in the introduction where the drawbacks are relieved while producing a long trough which is very easy to produce and to mount.

### Description of the Invention

This object is achieved by a long trough of the kind mentioned in the introduction which is peculiar in that the transverse wall is cast together with the sides of the trough element as a single piece made of polymeric concrete, wherein the transverse wall has an open-ended slot at a top side of the transverse wall for receiving a portion of the partitioning, the transverse wall further has a height extending above upper edges of the sides of the trough element, and where a bottom side of the transverse wall is spaced apart from a bottom of the trough element thereby establishing an underrun.

It is hereby possible to produce a profile constituting the bottom and sides of the trough element in which a single transverse wall is cast together with the sides of the trough element. It is thus possible to perform a demoulding irrespective of the contraction occurring in the polymeric concrete during the making of the trough.

Hereby is achieved a subsequent mounting of a transverse wall in a profile constituting the bottom and sidewall of the trough element.

Since a slot is formed at the top side of the transverse wall, it is possible in a simple way to place an element of the partitioning to be used for sty separation. Thus there is no need to use separate brackets or to perform a breaking through of the long trough in order to mount the partitioning at a position above the long trough. The partitioning will usually be disposed at the centre of the long trough when looking in longitudinal direction such that the area of exposed trough is the same at both sides of the partitioning. As the transverse wall extends at a distance above the upper edge of the sides of the trough elements, it is achieved that the slot can be given a large length such that the partitioning is supported along a considerable height. The length of the slot can be arbitrarily selected, depending on the support desired for the partitioning.

According to a special embodiment, the long trough according to the invention is peculiar in that the end walls of the outermost trough elements each has an open-ended slot at a top side of the end wall for receiving a portion of the partitioning, the end walls each further has a height extending above the upper edges of the sides of the outermost trough element.

The end walls in the long trough can optionally be provided with a slot. According to the invention it will therefore also be preferred that the end walls, which are provided with a slot, extend at a distance above the upper edges of the sides of the trough element as well. An even better support of the partitioning than the support achieved by means of the transverse walls can hereby be achieved.

The transverse wall is provided with its bottom side spaced apart from and above the bottom of the trough element. Hereby it becomes possible to establish an underrun and thereby distribute the feed over the entire long trough without needing to pass a feed pipe down to each single trough element at a position between two adjacent transverse walls. The feed will simply be distributed along the bottom of the long trough under the transverse walls. Such a distribution is very advantageous when performing wet feeding.

For trough elements disposed outermost in a juxtaposed row of elongated trough elements forming a long trough, it will be possible in a simple way to perform a change of the moulding tool such that the transverse walls located at the outer ends of the long trough do not have an opening between the underside of the transverse wall and the bottom of the trough element. In a simple way is hereby achieved a blocking of the two end walls of the long trough. Alternatively, a separate moulding tool can be used for making the two outermost trough elements.

The long trough is made of polymeric concrete.

The trough element can hereby be made entirely of polymeric concrete. It is preferred to make the transverse wall of polymeric concrete but it is possible by embedding in moulds to make the transverse walls of other materials which are embedded in the polymeric concrete.

According to a special embodiment, the long trough according to the invention is peculiar in that the transverse wall is disposed at one end of the trough element.

By such an embodiment, each single trough element can be made as sections that are put together for forming the long trough with such a form that the transverse wall forms a wanted division of the long trough into individual eating sections with a length adapted to the intended use.

According to a special embodiment, the long trough according to the invention is peculiar in that the top side of the transverse wall extends from the upper edges of the sidewalls of the trough element with increasing height above the side edge towards the centre of the long trough.

The transverse wall will hereby be in level with the upper side edge at the sides of the long trough and have a greater height at the centre of the long trough. The length of the slot can hereby be increased without need for the transverse walls extending up over the side edge right out at the joint between the sidewalls and the side edge.

The width of the long trough may typically be from 400 mm to 480 mm, preferably 440 mm. The height from bottom to top of the transverse wall may typically be from 220 mm to 350 mm, preferably 260 mm. The height of the transverse wall is typically from 200 mm to 280 mm, but may also be higher. The length of the slot can typically be from 120 mm to 250 mm, but may also be greater.

According to a particular embodiment, the long trough according to the invention is peculiar in that the slot at the top side of the transverse wall is disposed at the centre of the transverse wall and extends between 1/3 and 2/3 of the height of the transverse wall.

Ample securing is achieved hereby as a partitioning can be placed with a stabilising effect in the slot when the latter has some height. This is particularly the case when using a partitioning in the form of planks. Such planks can preferably be plastic planks.

According to a particular embodiment, the long trough according to the invention is peculiar in that each trough element has a length between 0.02 m and 2 m. In a particular embodiment, the trough element has a length of 1.2 m.

A trough element can be made with a length from 20 mm to 2000 mm.

A long trough with a length of 6000 mm and divided by transverse walls over the entire length in order to provide sufficient support for a partitioning will therefore include the following trough elements:
- a trough element with left end wall of 1200 mm;
- a trough element with transverse wall of 1200 mm;
- a trough element with transverse wall of 1200 mm;
- a trough element with transverse wall of 1200 mm;
- a trough element with transverse wall of 40 mm; and
- a trough element with right end wall of 1160 mm.

There is used a trough element with transverse wall which is 40 mm such that there is achieved an even distribution of wall supports in longitudinal direction of the long trough.

By this design, a long trough will fit typical modules in a stable where long troughs with a length of 6 m are commonly used.

When each of the interposed trough elements have a transverse wall disposed at one end of the trough element, there is achieved an appropriate division into eating sections with a length of 1.20 m. This corresponds to the eating section for four pigs when the long trough is applied in a pigsty.

According to a special embodiment, the long trough according to the invention is peculiar in that the transverse wall is disposed at any point in longitudinal direction of the trough element.

According to a special embodiment, the long trough according to the invention is peculiar by including five trough elements. By this form the long trough will have a length corresponding to a normal module in a sty construction in pig stables.

According to a special embodiment, the long trough according to the invention is peculiar in that a transverse wall has a length such that it can cover the entire cross-sectional profile of a trough element.

Such a transverse wall can have an opening providing the underrun when used in an interposed position in the long trough. When used in an outer position as end wall in the long trough, the transverse wall can be closed towards the bottom.

According to a special embodiment, the long trough according to the invention is peculiar in that another transverse wall is disposed between two successive trough elements, where the transverse walls divide the long trough into individual eating sections.

By this design, the transverse wall can be disposed between two successive trough elements such that the long trough is divided in that situation. This is advantageous when the two outermost trough elements are disposed with end walls facing outwardly in order to form end walls in a long trough.

Alternatively, a transverse wall covering the entire cross-sectional profile of a trough element may also be used as end wall element and constitute an end wall in a long trough where all trough elements are positioned with the same orientation such that a transverse wall disposed at one end of a trough element is positioned in the same direction.

Alternatively, it is possible to make the transverse wall with different height. It will thus be possible that the bottom side of the transverse wall in a central area is located at a lower position than adjacent parts of the bottom side of the transverse wall. The spacing between the bottom and the bottom side of the transverse wall can be limited thereby, obviating the risk of piglets getting stuck under the transverse wall.

The bottom of the trough can be designed with a curving shape that is approximately circular. Alternatively, the trough can be designed with a V-shaped bottom. A V-shaped bottom can ensure a rapid feeding such that the time from the first feed leaving the feed pipe until the feed is present in the entire bottom of the long trough is minimised most. This is achieved due to the V-shape which provides a small surface in the bottom of the trough. If the trough is V-shaped, it is particularly advantageous to have a transverse wall with varying height for the bottom side of the transverse wall. However, it is to be ensured that sufficient size of the opening is attained so as to provide certain through-flow of the wet feed.

### Description of the Drawing

In the following, the invention will be explained in more detail with reference to the enclosed drawing showing an embodiment example of a long trough according to the invention, and wherein:
- Fig. 1: shows a perspective view of a long trough according to the invention;
- Fig. 2: shows side view of a transverse wall with a length such that it can cover the entire cross-sectional profile of a trough element;
- Fig. 3: shows an end view of a trough element;
- Fig. 4: shows an end view of a trough element including a transverse wall;
- Figs. 5-11: show a long through and a partitioning with feed pipe as seen in various directions;
- Fig. 12: shows a second embodiment of a transverse wall;
- Fig. 13: shows a third embodiment of a transverse wall;
- Fig. 14: shows a fourth embodiment of a transverse wall; and
- Fig. 15: shows a fifth embodiment of a transverse wall.

### Detailed Description of Embodiments of the Invention

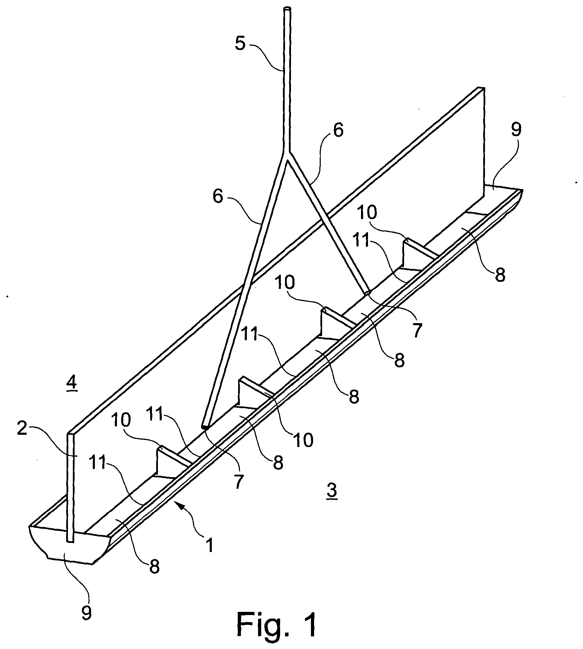

Fig. 1 shows a long trough 1 intended for disposition under a partitioning 2. The partitioning 2 delimits two stys as indicated by 3 and 4, which are intended for pigs. On the partitioning 2 is mounted a vertical feed pipe 5 divided into two branch pipes 6 that each have a mouth 7 at a position immediately over the long trough 1.

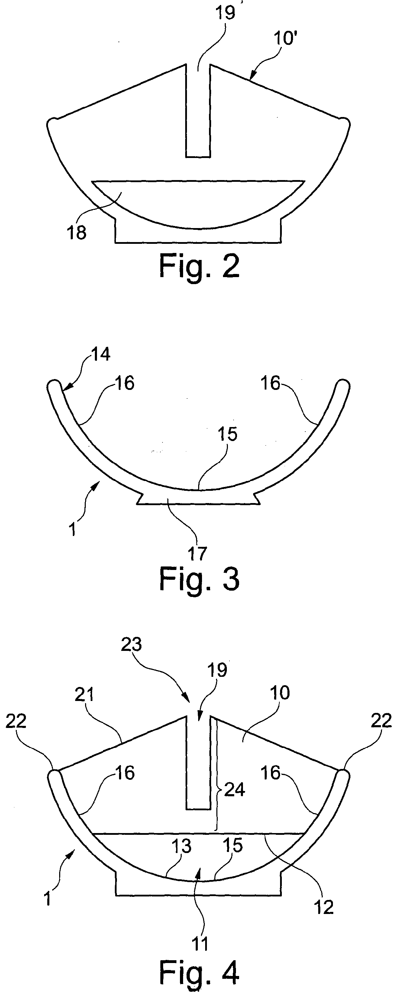

The shown long trough consists of five eating sections 8. End walls 9 are provided in the long trough. Division of the long trough into individual sections is effected by means of four transverse walls 10 disposed inside the long trough. There is an opening 11 under each of the transverse walls between the bottom side 12 (see Fig. 4) of the transverse wall and the bottom 13 of the trough (see Fig. 4).

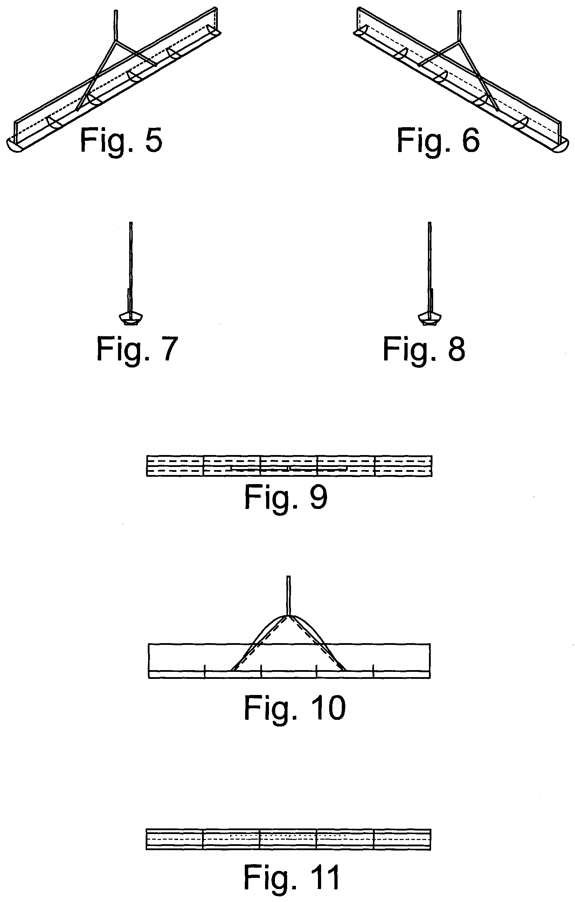

The long trough is made of polymeric concrete and made of separate elongated trough elements, as will be explained in more detail below with reference to Figs. 5-11.

Fig. 3 shows a cross-sectional profile of the long trough 1. It appears that a curving wall 14 is provided, having a bottom 15 and sidewalls 16. Moreover, there is a base 17 used for positioning the trough on a floor.

In Fig. 2 appears a transverse wall 10' with a length such that it is capable of covering the entire cross-sectional profile for a trough element shown in Fig. 3. The transverse wall 10' can therefore be used between two successive trough elements in order to constitute a transverse wall.

In Fig. 2 the transverse wall 10' is shown with an opening 18 corresponding to the opening 11 formed between the bottom side 12 of a transverse wall 10 and the bottom 13 of the long trough 1.

In Fig. 4 is seen long trough 1 where a transverse wall 10 is integrated by casting together with the sidewalls 16 of the long trough. An opening 11 therefore appears under the bottom side 12 of the transverse wall 10 and the bottom 15 of the trough. The top side 21 of the transverse wall 10 extends from the upper edges 22 of the sidewalls 16 of the trough element with increasing height above the side edge 22 towards the centre 23 of the long trough.

The top side 21 of the transverse wall will hereby be in level with the upper side edge 21 at the sides of the long trough and have a greater height 24 at the centre 23 of the long trough.

Gaps 11, 18 that are provided thus enable feed to flow throughout the entire length of the long trough under the transverse walls, irrespective of the presence of only two dispensing apertures 7 that distribute the feed to the five trough sections.

At its top side, the transverse wall 10, 10' has a slot 19. This slot is adapted to receive the partitioning 2. The partitioning will then be disposed in the slot in a way that appears from Fig. 1. The partitioning 2 is therefore supported over its entire length by the engagement with the slot 19 only. In order to ensure the best possible stability, the slot will have a length corresponding to about 2/3 of the height of the transverse wall 10, 10'.

The long trough is made of aligned, elongated trough elements. This will be explained in more detail with reference to Figs. 5-11.

It appears on these Figures that the long trough 1 is made of five trough elements 20 and a partitioning 10'. All the trough elements 20 are therefore identical as they consist of a cross-sectional profile as shown in Fig. 3, where a transverse wall 10 is provided at one end. The end walls 9 are closed at the two ends of the long trough. The other transverse walls 10 will be provided with an opening 11 as shown in Fig. 4.

The long trough 1 shown in Figs. 5-11 will thus be provided with closed end walls 9 and transverse walls that enable outflow and distribution of the feed along the entire length of the long trough.

As alternative to the design shown in Fig. 5, all sections 20 can be juxtaposed in longitudinal direction with the partitioning disposed with the same orientation, e.g. oriented to the right as shown on Fig. 5. In such a situation, the end wall of the long trough disposed to the far left will be provided in the form of a separate transverse wall having a length such that it covers the entire cross-sectional profile of the trough element. The separate transverse wall located to the far left on Fig. 5 will in this situation be closed such that the long trough appears with a closed end wall.

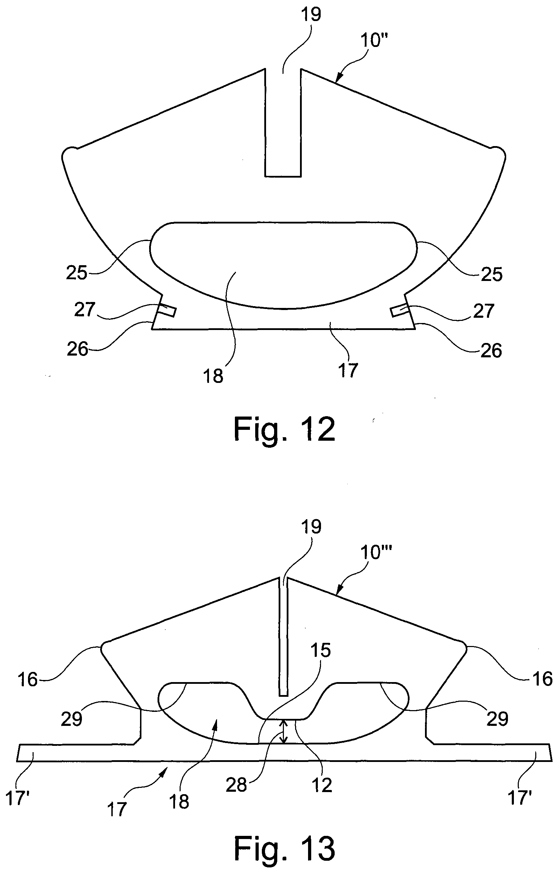

Fig. 12 shows a transverse wall 10' corresponding to the transverse wall 10 illustrated in Fig. 2. It is seen here that the opening 18 is provided with rounded corners 25. Hereby is achieved easier cleaning compared with the tapering corners shown in the opening 18 in the embodiment shown in Fig. 2.

In Fig. 12 is seen that the base 17 used for placing the trough on a floor is provided with inclining sidewalls 26. The sidewalls extend inclining outwards from the centre of the transverse wall 10", whereby cleaning is facilitated. Cutouts 27 are provided in the inclining sidewalls 26, used for mounting the trough. Angle braces and/or T-shaped inserts can therefore be used in the troughs.

It is noted that the bases 17 shown in Figs. 2-4 may as well be provided with cutouts 27 in the sidewalls.

Fig. 13 shows a third embodiment of a transverse wall 10‴. This embodiment is particularly suited for piglets. The opening 18 will have less height than the openings shown in the previous Figures. The spacing 28 provided between the bottom 15 of the trough and the bottom side 18 of the transverse wall will be in the order of 30 mm. However, this spacing can vary from 20 to 40 mm.

The height between the curved trough bottom and an upper bottom side 29 of the transverse wall at the two side edges will be in the order of 50-60 mm. It is hereby avoided that piglets can be injured under the transverse wall.

On Fig. 13 is seen that the base 17 is not only located under the trough. The base 17 is extended by side parts 17' extending beyond the sidewalls of the trough. Hereby is achieved a solid bottom extending along the entire length of the long trough.

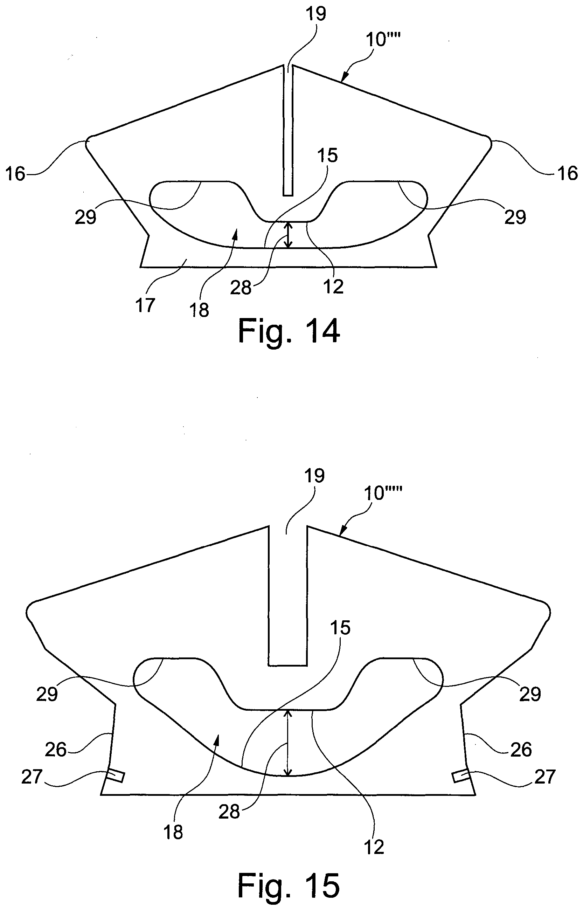

Fig. 14 shows a fourth embodiment of a transverse wall 10ʺʺ. This embodiment differs from the embodiment shown in Fig. 13 in that the base 17 is not provided with side parts.

Fig. 15 shows a fifth embodiment of a transverse wall 10‴ʺ.

This transverse wall is, like the embodiment shown in Figs. 2 and 12, intended for slaughter pigs. The openings 18 in this transverse wall 10ʺ‴ are provided a shape corresponding to the one illustrated in Fig. 13. However, the distance 28 between the trough 15 and the bottom side 12 of the transverse wall is here in the order of 60 mm, but may vary from 50 to 70 mm. This ensures a sufficient flow through of the wet feed.

It is seen here that the trough bottom 15 is V-shaped. This means that there is very small surface at the bottom. Hereby is achieved a more rapid feeding time, i.e. the time from the initial feed is leaving a feed pipe until feed is present over the entire bottom of the long trough.

## Claims

1. A long trough (1) for mounting under a partitioning (2) between two sties (3,4), the long trough (1) including a plurality of elongated trough elements (20) adapted to be juxtaposed along a longitudinal direction, the long trough (1) at each opposite end comprises an end wall (9) arranged on an outermost trough element (20), each trough element further comprises at least one transverse wall arranged in an interposed position inside the long trough (1) between the end walls (9), wherein the at least one transverse wall is extending transversely of the trough elements (20), **characterised in that** a transverse wall (10, 10', 10'', 10‴, 10ʺʺ, 10ʺ‴) is cast together with the sides (16) of a trough element (20) as a single piece made of polymeric concrete, wherein the transverse wall (10, 10', 10'', 10‴, 10ʺʺ, 10‴ʺ) has an open-ended slot (19) at a top side (21) of the transverse wall (10, 10', 10", 10‴, 10ʺʺ, 10ʺ‴) for receiving a portion of the partitioning (2), the transverse wall (10, 10', 10'', 10‴, 10ʺʺ, 10ʺ‴) further has a height extending above upper edges (22) of the sides of the trough element (20), and where a bottom side of the transverse wall (10, 10', 10'', 10‴, 10ʺʺ, 10‴ʺ) is spaced apart from a bottom (13, 15) of the trough element (20) thereby establishing an underrun.

2. The long trough (1) according to claim 1, wherein the transverse wall (10, 10', 10'', 10‴, 10ʺʺ, 10‴ʺ) is disposed at one end of the trough element (20).

3. The long trough (1) according to claim 1, wherein the transverse wall (10, 10', 10", 10‴, 10ʺʺ, 10ʺ‴) is disposed at any point in the longitudinal direction of the trough element (20).

4. The long trough (1) according to claim 1, wherein the end walls (9) of the outermost trough elements (20) each have an open-ended slot (19) at a top side of the end wall (9) for receiving a portion of the partitioning (2), the end walls (9) each further have a height extending above the upper edges (22) of the sides of the outermost trough element (20).

5. The long trough (1) according to any of the preceding claims, wherein another transverse wall is disposed between two successive trough elements (20), where the transverse walls (10, 10', 10'', 10‴, 10ʺʺ, 10‴ʺ) divide the long trough (1) into individual eating sections (8).

6. The long trough (1) according to any of the preceding claims, wherein the top side (21) of the transverse wall (10, 10', 10'', 10‴, 10ʺʺ, 10‴ʺ) extends from the upper edges (22) of the sides (16) of the trough element (20) towards the centre (23) of the long trough (1) with increasing height above the upper edges (22).

7. The long trough (1) according to any of the preceding claims, wherein the slot (19) at the top side (21) of the transverse wall (10, 10', 10", 10‴, 10ʺʺ, 10‴ʺ) is disposed at the centre of the transverse wall (10, 10', 10", 10‴, 10ʺʺ, 10‴ʺ) and extends between 1/3 and 2/3 of the height of the transverse wall (10, 10', 10", 10‴, 10ʺʺ, 10‴ʺ).

8. The long trough (1) according to any of the preceding claims, wherein each trough element (20) has a length between 1 m and 1.3 m, preferably a length of 1.2 m.

9. The long trough (1) according to any of the preceding claims, wherein the long through (1) includes five trough elements (20).

10. The long trough (1) according to any of the preceding claims, wherein the transverse wall (10, 10', 10'', 10‴, 10ʺʺ, 10‴ʺ) has a length in the transverse direction such that it covers at least an upper part of the cross-sectional profile of the trough element (20).

## Patentansprüche

1. Länglicher Trog (1) zum Montieren unter einer Trennwand (2) zwischen zwei Ställen (3, 4), wobei der längliche Trog (1) eine Vielzahl von länglichen Trogelementen (20) beinhaltet, die dazu ausgelegt sind, entlang einer Längsrichtung nebeneinander positioniert zu werden, wobei der längliche Trog (1) an jedem gegenüberliegenden Ende eine Stirnwand (9) umfasst, die an einem äußersten Trogelement (20) angeordnet ist, jedes Trogelement ferner mindestens eine Querwand umfasst, die in einer Zwischenposition innerhalb des länglichen Trogs (1) zwischen den Stirnwänden (9) angeordnet ist, wobei sich die mindestens eine Querwand quer zu den Trogelementen (20) erstreckt, **dadurch gekennzeichnet, dass** eine Querwand (10, 10', 10'', 10‴, 10ʺʺ, 10ʺ‴) mit den Seiten (16) eines Trogelements (20) als ein einziges aus Polymerbeton hergestelltes Stück gegossen ist, wobei die Querwand (10, 10', 10'', 10‴, 10ʺʺ, 10‴ʺ) an einer Oberseite (21) der Querwand (10, 10', 10'', 10‴, 10ʺʺ, 10‴ʺ) einen offenendigen Schlitz (19) zum Aufnehmen eines Abschnitts der Trennwand (2) aufweist, wobei die Querwand (10, 10', 10'', 10‴, 10ʺʺ, 10‴ʺ) ferner eine sich über Oberkanten (22) der Seiten des Trogelements (20) erstreckende Höhe aufweist und wobei eine Unterseite der Querwand (10, 10', 10'', 10‴, 10ʺʺ, 10‴ʺ) von einem Boden (13, 15) des Trogelements (20) beabstandet ist, wodurch ein Unterlauf gebildet wird.

2. Länglicher Trog (1) nach Anspruch 1, wobei die Querwand (10, 10', 10'', 10‴, 10,ʺʺ 10‴ʺ) an einem Ende des Trogelements (20) angeordnet ist.

3. Länglicher Trog (1) nach Anspruch 1, wobei die Querwand (10, 10', 10'', 10‴, 10ʺʺ, 10‴ʺ) an beliebiger Stelle in der Längsrichtung des Trogelements (20) angeordnet ist.

4. Länglicher Trog (1) nach Anspruch 1, wobei die Stirnwände (9) der äußersten Trogelemente (20) an einer Oberseite der Stirnwand (9) jeweils einen offenendigen Schlitz (19) zum Aufnehmen eines Abschnitts der Trennwand (2) aufweisen, wobei die Stirnwände (9) ferner jeweils eine sich über die Oberkanten (22) der Seiten des äußersten Trogelements (20) erstreckende Höhe aufweisen.

5. Länglicher Trog (1) nach einem der vorhergehenden Ansprüche, wobei eine weitere Querwand zwischen zwei aufeinander folgenden Trogelementen (20) angeordnet ist, wobei die Querwände (10, 10', 10'', 10‴, 10ʺʺ, 10‴ʺ) den länglichen Trog (1) in einzelne Futtersegmente (8) unterteilen.

6. Länglicher Trog (1) nach einem der vorhergehenden Ansprüche, wobei sich die Oberseite (21) der Querwand (10, 10', 10'', 10‴, 10ʺʺ, 10‴ʺ) von den Oberkanten (22) der Seiten (16) des Trogelements (20) in Richtung der Mitte (23) des länglichen Trogs (1) mit zunehmender Höhe über die Oberkanten (22) erstreckt.

7. Länglicher Trog (1) nach einem der vorhergehenden Ansprüche, wobei der Schlitz (19) an der Oberseite (21) der Querwand (10, 10', 10", 10‴, 10ʺʺ, 10‴ʺ) in der Mitte der Querwand (10, 10', 10'', 10‴, 10ʺʺ, 10‴ʺ) angeordnet ist und sich zwischen 1/3 und 2/3 der Höhe der Querwand (10, 10', 10'', 10‴, 10ʺʺ, 10‴ʺ) erstreckt.

8. Länglicher Trog (1) nach einem der vorhergehenden Ansprüche, wobei jedes Trogelement (20) eine Länge zwischen 1 m und 1,3 m, vorzugsweise eine Länge von 1,2 m, aufweist.

9. Länglicher Trog (1) nach einem der vorhergehenden Ansprüche, wobei der längliche Trog (1) fünf Trogelemente (20) beinhaltet.

10. Länglicher Trog (1) nach einem der vorhergehenden Ansprüche, wobei die Querwand (10, 10', 10'', 10‴, 10ʺʺ, 10‴ʺ) derart eine Länge in der Querrichtung aufweist, dass sie mindestens einen oberen Teil des Querschnittsprofils des Trogelements (20) abdeckt.

## Revendications

1. Auge longue (1) destinée à être montée sous une cloison (2) entre deux porcheries (3, 4), l'auge longue (1) comportant une pluralité d'éléments d'auge (20) allongés conçus pour être juxtaposés le long d'une direction longitudinale, l'auge longue (1) au niveau de chaque extrémité opposée comprend une paroi d'extrémité (9) agencée sur un élément d'auge (20) le plus extérieur, chaque élément d'auge comprend également au moins une paroi transversale agencée dans une position intercalée à l'intérieur de l'auge longue (1) entre les parois d'extrémité (9), dans laquelle l'au moins une paroi transversale se prolonge transversalement par rapport aux éléments d'auge (20), **caractérisé en ce qu'**une paroi transversale (10, 10', 10'', 10‴, 10ʺʺ, 10ʺ‴) est coulée ensemble avec les côtés (16) d'un élément d'auge (20) en tant que pièce unique faite de béton polymère, dans laquelle la paroi transversale (10, 10', 10", 10‴, 10ʺʺ, 10ʺ‴) a une fente (19) à extrémité ouverte au niveau d'un côté supérieur (21) de la paroi transversale (10, 10', 10", 10‴, 10ʺʺ, 10ʺ‴) destinée à recevoir une partie de la cloison (2), la paroi transversale (10, 10', 10ʺ, 10‴, 10ʺʺ, 10ʺ‴) a également une hauteur se prolongeant au-dessus de bords supérieurs (22) des côtés de l'élément d'auge (20), et dans laquelle un côté inférieur de la paroi transversale (10, 10', 10", 10‴, 10‴, 10ʺ‴) est espacé d'une partie inférieure (13, 15) de l'élément d'auge (20), établissant ainsi un dessous.

2. Auge longue (1) selon la revendication 1, dans laquelle la paroi transversale (10, 10', 10'', 10‴, 10,ʺʺ 10ʺ‴) est disposée au niveau d'une extrémité de l'élément d'auge (20).

3. Auge longue (1) selon la revendication 1, dans laquelle la paroi transversale (10, 10', 10'', 10‴, 10ʺʺ, 10ʺ‴) est disposée au niveau d'un point quelconque dans la direction longitudinale de l'élément d'auge (20).

4. Auge longue (1) selon la revendication 1, dans laquelle les parois d'extrémité (9) des éléments d'auge (20) les plus extérieurs ont chacune une fente (19) à extrémité ouverte sur un côté supérieur de la paroi d'extrémité (9) destinée à recevoir une partie de la cloison (2), les parois d'extrémité (9) ont également chacune une hauteur se prolongeant au-dessus des bords supérieurs (22) des côtés de l'élément d'auge (20) le plus extérieur.

5. Auge longue (1) selon l'une quelconque des revendications précédentes, dans laquelle une autre paroi transversale est disposée entre deux éléments d'auge (20) successifs, dans laquelle les parois transversales (10, 10', 10ʺ, 10‴, 10ʺʺ, 10ʺ‴) divisent l'auge longue (1) en sections de manger (8) individuelles.

6. Auge longue (1) selon l'une quelconque des revendications précédentes, dans laquelle le côté supérieur (21) de la paroi transversale (10, 10', 10'', 10‴, 10ʺʺ, 10ʺ‴) se prolonge à partir des bords supérieurs (22) des côtés (16) de l'élément d'auge (20) vers le centre (23) de l'auge longue (1) avec une hauteur croissante au-dessus des bords supérieurs (22).

7. Auge longue (1) selon l'une quelconque des revendications précédentes, dans laquelle la fente (19) au niveau du côté supérieur (21) de la paroi transversale (10, 10', 10'', 10‴, 10ʺʺ, 10ʺ‴) est disposée au niveau du centre de la paroi transversale (10, 10', 10", 10‴, 10ʺʺ, 10‴ʺ) et se prolonge entre 1/3 et 2/3 de la hauteur de la paroi transversale (10, 10', 10", 10‴, 10ʺʺ, 10‴ʺ).

8. Auge longue (1) selon l'une quelconque des revendications précédentes, dans laquelle chaque élément d'auge (20) a une longueur comprise entre 1 m et 1,3 m, de préférence une longueur de 1,2 m.

9. Auge longue (1) selon l'une quelconque des revendications précédentes, dans laquelle l'auge longue (1) comporte cinq éléments d'auge (20).

10. Auge longue (1) selon l'une quelconque des revendications précédentes, dans laquelle la paroi transversale (10, 10', 10", 10‴, 10ʺʺ, 10‴ʺ) a une longueur dans la direction transversale de sorte qu'elle recouvre au moins une partie supérieure du profil de section transversale de l'élément d'auge (20).
